(19) Europäisches Patentamt
European Patent Office
Office européen des brevets

(11) **EP 1 806 486 A2**

(12) **EUROPÄISCHE PATENTANMELDUNG**

(43) Veröffentlichungstag:
**11.07.2007 Patentblatt 2007/28**

(51) Int Cl.:
*F01N 3/021* (2006.01)    *F02D 41/02* (2006.01)
*F01N 9/00* (2006.01)

(21) Anmeldenummer: **06025884.5**

(22) Anmeldetag: **14.12.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **05.01.2006 DE 102006000845**

(71) Anmelder: **Volkswagen AG**
**38436 Wolfsburg (DE)**

(72) Erfinder: **Vanhaelst, Robin**
**38442 Wolfsburg (DE)**

(54) **Verfahren zur Bestimmung der Russbeladung eines Partikelfilters**

(57)    Die Erfindung betrifft ein Verfahren zur Bestimmung der Russbeladung eines Partikelfilters, der einem Verbrennungsmotor nachgeschaltet ist, wobei der Filter periodisch durch Russverbrennung regeneriert wird, bevor die Beladung zu groß wird.

Erfindungsgemäß wird die Steuerung der Partikelfilterregenerierung auf der Basis der von einer Lambdasonde gemessenen Messwerte durchgeführt. Mit der vorliegenden Erfindung gelingt es erstmals vorteilhaft, eine Lambdasonde zur Steuerung der Regenerierung eines mit Russpartikeln beladenen Partikelfilters einzusetzen.

FIG. 1

EP 1 806 486 A2

**Beschreibung**

Die Erfindung betrifft ein Verfahren zur Bestimmung der Russbeladung eines Partikelfilters, der einem Verbrennungsmotor nachgeschaltet ist, wobei der Filter periodisch durch Russverbrennung regeneriert wird, bevor die Beladung zu groß wird.

Der Einbau eines Partikelfilters in die Abgasleitung einer Brennkraftmaschine, insbesondere eines Dieselmotors ermöglicht es, die Menge an in die Umgebung abgegebene Verbrennungsrückstände, insbesondere Russpartikel erheblich zu verringern.

Während des Betriebes eines Verbrennungsmotors wird der Partikelfilter zunehmend mit unverbrannten Kohlenwasserstoffen beladen, deren Ansammlung dazu führt, dass die Leistung des Motors aufgrund einer Erhöhung des Differentialdrucks zwischen der Eingangsseite und der Ausgangsseite des Filters abnimmt, wodurch der Auslassdruck des Motors steigt. Es ist daher notwendig, den Filter durch Abbrennen der Partikel zu regenerieren.

Diese thermische Regenerierung wird vorzugsweise dann durchgeführt, wenn der Filter eine bestimmte Beladung erreicht hat, wobei sie als Funktion des verringerten Wirkungsgrades des Filters, als Funktion der Differentialdruckerhöhung oder als Funktion eines Zerstörungsrisikos des Filters durch übermäßige Erwärmung während der durch Verbrennung einer zu großen Russpartikelmenge durchgeführten Regenerierung festgestellt werden kann.

Üblicherweise wird ein Regenerierungsschritt zu Beginn eines bestimmten Zeitintervalls oder einer zurückgelegten Wegstrecke ausgelöst, ohne die tatsächliche Beladung des Filters zu bestimmen, wodurch einerseits übermäßige Beladungen des Filters nicht berücksichtigt werden können und andererseits eine zu häufige Regenerierung erfolgt.

Es sind bereits Verfahren und Vorrichtungen bekannt, um diese Regenerierung durch Schätzung einer tatsächlichen Beladung des Filters zu optimieren, wobei diese Schätzung insbesondere vom Differentialdruck abgeleitet wird, der zwischen der Eingangsseite und der Ausgangsseite des Filters herrscht. So ist aus der EP 587146 ein Verfahren zur Regenerierung des Partikelfilters bekannt, bei dem die Regenerierung des Filters ausgelöst wird, sobald die Beladung des Filters einen vorgegebenen Wert überschreitet. Diese Beladung wird aus dem Differentialdruck abgeleitet, der zwischen dem Eingang und dem Ausgang des Filters herrscht und der mit $\Delta P$ bezeichnet wird gemäß der folgenden Gleichung:

$$\Delta \dot{P} = c \dot{A},$$

wobei c die Beladung des Filters bezeichnet und A eine charakteristische Größe für die Gasströmung durch den Motor ist. A ist eine Funktion des Verhältnisses zwischen dem Produkt aus der Motordrehzahl und dem Druck im Einlasssammler und der mittleren Temperatur zwischen der Eingangsseite und der Ausgangsseite des Partikelfilters und dem Produkt aus der Temperatur im Einlasssammler und dem Druck auf der Eingansseite des Partikelfilters.

Nachteilig hierbei ist, dass die für die Gasströmung durch den Motor verwendete charakteristische Größe nicht genau das den Partikelfilter durchsetzende Gas darstellt. Dies gilt insbesondere im Falle einer Abgasrückführung, so dass demzufolge die Bestimmung der Filterbeladung nur mit entsprechend geringer Präzision bestimmt werden kann.

Aus der DE 101 00 418 A1 ist ein Verfahren und eine Vorrichtung zur Steuerung eines Abgasnachbehandlungssystems bekannt, wobei bei vorliegen erster Betriebszustände der Brennkraftmaschine eine den Zustand des Abgasnachbehandlungssystems charakterisierende Zustandsgröße ausgehend von wenigstens einer Druckdifferenz zwischen dem Druck vor und nach dem Abgasnachbehandtungssystem vorgebbar ist und bei vorliegen zweiter Betriebszustände die das Abgasnachbehandlungssystem charakterisierende Zustandsgröße ausgehend von wenigstens einer Betriebskenngröße der Brennkraftmaschine simuliert wird. Als Betriebskenngröße wird hierbei vorzugsweise eine Größe verwendet, die vom Abgasvolumenstrom, der Drehzahl, der eingespritzten Kraftstoffmenge oder der zugeführten Frischluftmenge abhängt. Bei diesem Abgasnachbehandlungssystem wird der Beiadungszustand des Partikelfilters ausgehend vom Differenzdruck ermittelt. Dies ermöglicht eine sehr genaue Erfassung des Beladungszustandes. Für die zweiten Beladungszustände erfolgt dagegen eine Simulation des Beladungszustandes. Diese zweiten Betriebszustände sind dadurch charakterisiert, dass sie eine genaue Erfassung nicht ermöglichen, weil die Messgrößen in bestimmten Betriebszuständen ungenau sind, was hier insbesondere der Fall ist, wenn der Abgasvolumenstrom kleine Werte annimmt. Durch Erfassung des Druckgefälles über dem Partikelfilter sind zwar Rückschlüsse auf die im Partikelfilter angesammelte Russmasse möglich, jedoch hängt der zu messende Differenzdruck über dem Filter von den Strömungszuständen im Filter und insbesondere dem Abgasvolumenstrom ab, die nicht berücksichtigt werden.

Der Erfindung liegt daher die Aufgabe zugrunde, ein Verfahren zur Bestimmung der Russbeladung eines Partikelfilters zu schaffen, das eine genauere Ermittlung der Partikelfilterbeladung ermöglicht, wobei auch Systemtoleranzen berücksichtigt werden.

Diese Aufgabe wird durch ein Verfahren mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Das erfindungsgemäße Verfahren zur Bestimmung der Russbeladung eines Partikelfilters, der einem Verbrennungsmotor nachgeschaltet ist, wobei der Filter periodisch durch Russverbrennung regeneriert wird, bevor die Beladung zu groß wird, zeichnet sich dadurch aus, dass die Steuerung der Partikelfilterregenerierung auf der Basis der von einer Lambdasonde gemessenen Messwerte durchgeführt wird. Allgemein gilt, dass ein Luft-Kraftstoff-Verhältnis von $\lambda<1$ ein fettes Gemisch mit hohem Kraftstoffanteil und ein Verhältnis $\lambda>1$ ein mageres Gemisch kennzeichnet. Für $\lambda>2$ ist daher eher eine geringe Russmassenkonzentration zu erwarten. Im Bereich von $\lambda=1{,}0$ muss sich aufgrund des höheren Kraftstoffanteils auch die Russmassenkonzentration erhöhen. Da die Lambdasonde den Sauerstoffanteil im Abgas misst, der in Abhängigkeit vom Kraftstoffanteil variiert, kann somit ein Zusammenhang mit der Russmassenkonzentration hergestellt werden, der die Beladung des Partikelfilters zuverlässig widerspiegelt.

Die Lambdasonde misst fortlaufend den Sauerstoffanteil im Abgas, der nach der Verbrennung vorliegt. Dabei ermittelt die Lambdasonde die Abgaskonzentration durch eine vergleichende Sauerstoffmessung. Der Sauerstoffgehalt der Außenluft wird mit dem Restsauerstoff im Abgas verglichen. Der Sauerstoff der Außenluft bildet somit den Referenzwert, der konstant bleibt. Befindet sich der Restsauerstoffgehalt im Abgas bei 2 % (mager), so entsteht aufgrund der Differenz ein Spannungssignal von ungefähr 0,1 V. Sind weniger als 2 % Restsauerstoff vorhanden (fett), so macht sich das durch eine erhöhte Differenz zum Außenluftsauerstoff und einer Sondenspannung von ca. 0,9 V bemerkbar. Diese Unterschiede werden über ein Spannungssignal an das Steuergerät weitergegeben. Das Steuergerät korrigiert dann den weiteren Verbrennungsvorgang.

Die Lambdasonde weist im wesentlichen einen Spezialkeramikkörper auf, dessen Oberflächen mit gasdurchlässigen Platinelektroden versehen sind. Der Festelektrolyt ist in einem Stahlgehäuse eingebracht. Der äußere Teil des Keramikkörpers befindet sich im Abgasstrom, der innere Teil steht mit der Außenluft in Verbindung. Die Wirkung der Sonde beruht auf zwei physikalischen Faktoren. Zum einen ist das keramische Material porös und lässt so eine Diffusion des Luftsauerstoffs zu, zum anderen wird die Keramik bei Temperaturen von ca. 300 °C leitend. Diese herkömmliche Lambdasonde arbeitet im Prinzip wie ein Galvanisches Element, nur dass sie keinen-flüssigen, sondern einen festen Elektrolyten aufweist. Dieser Keramikelektrolyt lässt ab 300 °C Sauerstoffionen durch und sperrt den Durchlass für Elektronen. Die Sauerstoffionen wandern von innen (Außenluft) nach außen (Abgas), da im Abgas eine geringere Konzentration an Sauerstoff vorliegt. Die zuvor abgegebenen Elektronen werden von einer elektrisch leitenden Schicht aufgefangen. So bildet sich auf der Innenseite der Sonde ein Elektronenüberschuss und auf der Außenseite, wo die Sauerstoffionen ankommen, ein Elektronenmangel, was insgesamt zu einer elektrischen Spannung führt. Diese wird zur Auswertung dem Steuergerät übermittelt.

In einer besonderen Ausgestaltung wird das Verfahren unter Berücksichtigung einer Abgasrückführung betrieben. Hier gilt der Zusammenhang, je größer die Abgasrückführung ist, desto geringer ist die Menge an Frischluft, wodurch ein unmittelbarer Zusammenhang durch die von der Lambdasonde ermittelten Messwerte besteht. Das erfindungsgemäße Verfahren kann somit individuell für unterschiedliche Abgasrückführraten unterschiedliche Regenerationsprozesse für den Partikelfilter fahren. Daher ist es auch möglich, das Verfahren ohne Abgasrückführung zu betreiben.

In einer weiteren Ausgestaltung wird das Verfahren in Dieselmotoren verwendet Ebenso wie bei Fahrzeugen mit Benzinmotoren misst die Lambdasonde auch bei Dieselmotoren den Anteil des Restsauerstoffs im Abgas. Dieser Wert gibt an, ob der Sauerstoffgehalt im Zylinder hoch genug ist, um den Kraftstoff bei der Einspritzung optimal zu verbrennen. Dies ist eine wichtige Information, die sich für die Motorsteuerung nutzen lässt. Die von der Lambdasonde gesammelte information gelangt als elektrisches Signal an das elektronische Steuergerät und wird dort ausgewertet. Indem die Steuerung nun die Einspritzmenge des Diesels den Anforderungen entsprechend reguliert, wird das richtige Kraftstoff-Luftverhältnis gewährleistet.

Ferner besteht die Möglichkeit, zur Überprüfung der durch die Lambdasonde gesteuerten Regeneration des Partikelfilters die Abgastemperatur und/oder die Drehzahl und/oder die Kraftstoffzufuhr und/oder den Differenzdruck zwischen Eingangsseite und Ausgangsseite des Partikelfilters zu ermitteln. Dies hat den Vorteil, dass durch die Bestimmung eines weiteren Parameters die Tätigkeit der Lambdasonde überprüft werden kann.

Es ist bevorzugt, dass die Regeneration ausgelöst wird, wenn die ermittelte Russbeladung einen vorgebbaren oberen Grenzwert überschritten hat. Auf diese Weise wird eine Regeneration des Partikelfilters nur dann durchgeführt, wenn sie aufgrund der Beladung des Partikelfilters auch notwendig ist.

Vorteilhaft ist es, dass die Dauer der Regeneration an die vor der Regeneration ermittelte Russbeladung angepasst ist. Der verbrauchsintensive Regenerationsbetrieb wird auf diese Weise nur so lange wie nötig aufrechterhalten, was eine besonders kraftstoffsparende Partikelfilterregeneration ermöglicht.

Ferner ist bevorzugt, dass die Russbeladung des Partikelfilters nach erfolgter Regeneration ermittelt wird und mit einem vorgebbaren Sollwert verglichen wird und die Dauer einer nachfolgenden Regeneration in Abhängigkeit vom Ergebnis des Vergleichs festgelegt wird. Auf diese Weise kann die Regenerationsdauer optimiert werden. Vorteilhaft ist es auch, die Russbeladung unmittelbar vor und unmittelbar nach der Regeneration zu ermitteln. Aus der Differenz der Russbeladungen kann auf diese Weise die Qualität der Regeneration ermittelt werden und die Regenerationsdauer nachfolgender Regenerationen im Sinne einer möglichst vollständigen Regeneration festgelegt werden. Vorteilhaft ist es auch, den Erfolg von mehreren Regenerationen auf die beschriebene Weise zu ermitteln, um einen statistisch besser abgesicherten Mittelwert für die festzulegende Regenerationsdauer zu erhalten.

Zudem ist von Vorteil, wenn die Russbeladung des Partikelfilters während der Regeneration des Partikelfilters ermittelt wird und die Regeneration beendet wird, wenn die Russbeladung einen vorgebbaren unteren Grenzwert unterschreitet. Insbesondere bei einer an mehreren Stellen vorgenommenen Russbeladungsermittlung kann somit der Fortschritt der Regeneration besonders genau verfolgt und das Ende der Regeneration zuverlässig festgelegt werden.

Weitere Vorteile und Ausführungen der Erfindung werden nachfolgend anhand der Zeichnung erläutert. Dabei zeigt:

Fig. 1    in einem Diagramm den physikalischen Zusammenhang zwischen der Russmassenkonzentration und dem Verbrennugs-Luftverhältnis (Lambda);

Fig. 2    in einem Diagramm die Umrechnung der Schwärzungszahl (FSN) in die Russmassenkonzentration; und

Fig. 3    eine grafische Auftragung der im Abgas ermittelten Lambdamesswerte gegen die' durch eine Universal-Lambdasonde ermittelten Messwerte.

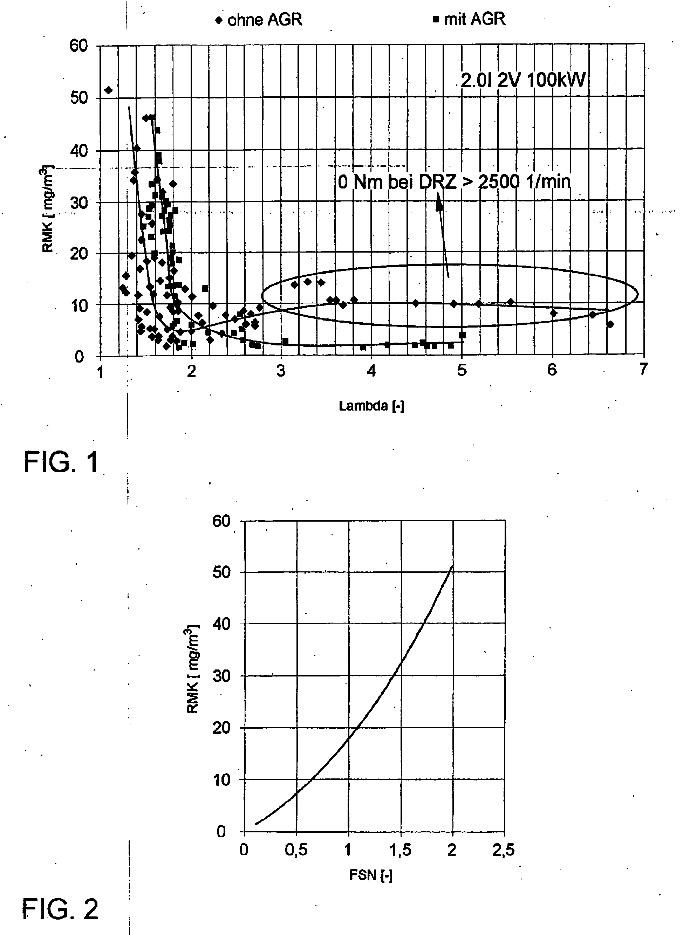

Fig.1 zeigt in einem Diagramm den physikalischen Zusammenhang zwischen der Russmassenkonzentration und dem Verbrennungs-Luftverhältnis (Lambda). Den Kurvenverläufen ist zu entnehmen, dass für $\lambda > 2$ die Russmassenkonzentration sowohl mit Abgasrückführung als auch ohne bei unter 10 mg/m$^3$ liegen. Das Kräftstoff/Luftgemisch ist in diesem Lambdabereich mager, so dass auch die Russmassenkonzentration eher gering ist. Für Lambdawerte im Bereich von eins steigen die Russmassenkonzentrationen mit bzw. ohne Abgasrückführung durch das nun fettere Kraftstoff/Luftgemisch exponentiell an, wobei die Steigung mit Abgasrückführung bereits bei $\lambda = 1,7$ beginnt, während sie ohne Abgasrückführung erst bei $\lambda = 1,6$ einsetzt. Dies ist auf den geringeren Sauerstoffanteil im rückgeführten Abgas zurückzuführen. Es besteht somit ein unmittelbarer Zusammenhang zwischen der Russmassenkonzentration und den gemessenen Lambdawerten, der auf die Beladung des Partikelfilters schließen lässt. Aus der Russmassenkonzentration kann nach Ermittlung der Luftmasse durch einen Heißfilmluftmassensensor, der im Ansaugsystem positioniert ist, die Russmasse pro Stunde bestimmt werden.

Fig. 2 zeigt in einem Diagramm die Umrechnung der Schwärzungszahl in die Russmassenkonzentration. Der Grafik ist zu entnehmen, dass die Schwärzungszahl mit zunehmender Russmassenkonzentration ebenfalls ansteigt. Die Schwärzungszahl wird nach einem Bosch-Verfahren bestimmt, bei dem auf einem Filterpapier Russpartikel gesammelt werden, die eine Schwärzung des Filterpapiers verursachen. Die Auswertung des Schwärzungsgrades erfolgt über einen Fotoelement-Adapter, der auf die geschwärzte Filterfläche aufgesetzt wird. Eine im Adapter eingebaute Lichtquelle strahlt die geschwärzte Fläche an, die in Abhängigkeit von der Schwärzung das Licht mehr oder weniger reflektiert. Das reflektierte Licht wird elektronisch erfasst, ausgewertet und als Schwärzungszahl wiedergegeben.

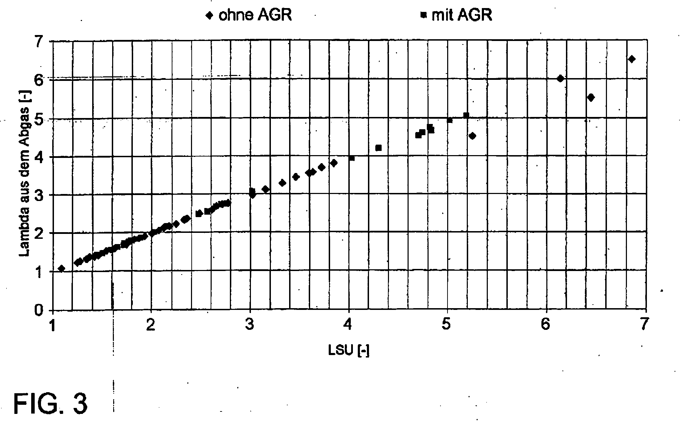

Fig. 3 zeigt in einem Diagramm die Genauigkeit der im Abgas ermittelten Lambdawerte durch Auftragung gegen die von einer Universal-Lambdasonde ermittelten Messwerte. Die Grafik zeigt eine Gerade, d. h., die Genauigkeit der durch die Lambdasonde ermittelten Messwerte ist für die Umsetzung des erfindungsgemäßen Verfahrens ausreichend. Universal-Lambdasonden sind Breitband-Lambdasonden, die sowohl in Ottomotoren mit Saugrohr- und Direkteinspritzung als auch in Dieselmotoren oder Gasmotoren eingesetzt werden können. Das große Einsatzspektrum dieser Lambdasonden ist darauf zurückzuführen, dass die Sonde die Sauerstoffkonzentration im Abgas über einen weiten Bereich bestimmt und damit auf das Luft-Kraftstoff-Verhältnis im Brennraum geschlossen werden kann.

Mit der vorliegenden Erfindung gelingt es erstmals vorteilhaft, die eine Lambdasonde zur Steuerung der Regenerierung des mit Russpartikeln beladenen Partikelfilters einzusetzen. Dies ermöglicht einen deutlich geringeren Applikationsaufwand, da das Verfahren auf einer physikalischen Grundlage basiert und somit die Dynamik, der Mengendrift und der Verschleiß automatisch berücksichtigt werden.

**Patentansprüche**

1.    Verfahren zur Bestimmung der Russbeladung eines Partikelfilters, der einem Verbrennungsmotor nachgeschaltet ist, wobei der Filter periodisch durch Russverbrennung regeneriert wird, bevor die Beladung zu groß wird, **dadurch gekennzeichnet, dass** die Steuerung der Partikelfilterregenerierung auf der Basis der von einer Lambdasonde gemessenen Messwerte durchgeführt wird.

2.    Verfahren nach Anspruch 1, **dadurch gekennzeichnet, dass** das Verfahren unter Berücksichtigung einer Abgasrückführung betrieben wird.

3.    Verfahren nach Anspruch 1, **dadurch gekennzeichnet, dass** das Verfahren ohne Abgasrückführung betrieben wird.

4.    Verfahren nach einem der vorhergehenden Ansprüche, **dadurch gekennzeichnet, dass** das Verfahren in Dieselmotoren verwendet wird.

**5.** Verfahren nach einem der vorhergehenden Ansprüche, **dadurch gekennzeichnet, dass** zur Überprüfung der durch die Lambdasonde gesteuerten Regeneration des Partikelfilters die Abgastemperatur und/oder die Drehzahl und/oder die Kraftstoffzufuhr und/oder der Differenzdruck zwischen Eingangsseite und Ausgangsseite des Partikelfilters ermittelt wird.

**6.** Verfahren nach einem der vorhergehenden Ansprüche, **dadurch gekennzeichnet, dass** die Regeneration ausgelöst wird, wenn die ermittelte Russbeladung einen vorgebbaren oberen Grenzwert überschritten hat.

**7.** Verfahren nach einem der vorhergehenden Ansprüche, **dadurch gekennzeichnet, dass** die Dauer der Regeneration an die vor der Regeneration ermittelte Russbeladung angepasst ist.

**8.** Verfahren nach einem der vorhergehenden Ansprüche, **dadurch gekennzeichnet, dass** die Russbeladung des Partikelfiters nach erfolgter Regeneration ermittelt wird und mit einem vorgebbaren Sollwert verglichen wird und die Dauer einer nachfolgenden Regeneration in Abhängigkeit vom Ergebnis des Vergleichs festgelegt wird.

**9.** Verfahren nach einem der vorhergehenden Ansprüche, **dadurch gekennzeichnet, dass** die Russbeladung des Partikelfilters während der Regeneration des Partikelfilters ermittelt wird und die Regeneration beendet wird, wenn die Russbeladung einen vorgebbaren unteren Grenzwert unterschreitet.

**10.** Verwendung einer Lambdasonde zur Steuerung der Regenerierung eines mit Russpartikeln beladenen Partikelfilters.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 587146 A

- DE 10100418 A1